# EUROPÄISCHE PATENTSCHRIFT

(11) **EP 3 443 133 B1**
(45) Veröffentlichungstag und Bekanntmachung des Hinweises auf die Patenterteilung: **18.12.2019**
(21) Anmeldenummer: 17712958.2
(22) Anmeldetag: 22.03.2017
(51) Int. Cl.: C21D 1/42, F27B 9/06, F27B 9/28, F27B 9/36, F27D 17/00, C21D 1/74, C21D 9/56, F27B 9/04, F27B 9/12, C21D 9/60

(54) **VERFAHREN UND OFENANLAGE ZUM WÄRMEBEHANDELN VON METALLBÄNDERN**
METHOD AND FURNACE INSTALLATION FOR HEAT TREATING METAL STRIP
PROCÉDÉ ET SYSTÈME DE FOUR POUR LE TRAITEMENT THERMIQUE DE BANDES MÉTALLIQUES

(30) Priorität: 15.04.2016 AT 503322016
(43) Veröffentlichungstag der Anmeldung: 20.02.2019
(73) Patentinhaber: Andritz Technology and Asset Management GmbH, 8045 Graz (AT)
(72) Erfinder: BORREL, Pierre-Jerome, 93100 Montreuil (FR); BLAKE, Eric, Sewickley Pennsylvania 151543 (US)
(74) Vertreter: Tschinder, Thomas
(86) Internationale Anmeldenummer: PCT/EP2017/056756
(87) Internationale Veröffentlichungsnummer: WO 2017/178200

(56) Entgegenhaltungen:
- EP-A1- 2 133 436
- WO-A2-2006/000011
- US-A- 5 472 528
- US-A- 5 770 838

## Beschreibung

Den Gegenstand dieser Erfindung bildet ein Verfahren zur Wärmebehandlung eines Metallbandes, wobei das Metallband mit Hilfe von heißem Gas in einer Vorwärmzone vorgewärmt wird und wobei das Metallband anschließend in einem direkt-befeuerten Ofen in einer reduzierenden und/oder oxidierenden Atmosphäre weiter wärmebehandelt wird. Den Gegenstand dieser Erfindung bildet auch eine Ofenanlage zur Durchführung des erfindungsgemäßen Verfahrens.

Die Wärmebehandlung von Metallbändern erfolgt häufig vor dem Verzinken des Metallbandes oder auch in Glühöfen nach einer Beizlinie.

Die US 5,770,838 offenbart einen Ofen zur Bandbehandlung eines Metallbandes mit einer Vorwärmzone, einer Induktionsheizung und einer nachfolgenden Heizzone.

Eine Möglichkeit zur Wärmebehandlung ist die Verwendung von direkt-befeuerten Öfen (DFF, direct fired furnace), bei denen die Brenner direkt im Ofeninneren angeordnet sind. Bei diesen Öfen gibt es eine Vorwärmzone in der das kontinuierlich hindurchgeführte Metallband mit Hilfe der heißen Abgase aus dem direkt-befeuerten Ofen auf ungefähr 200 - 300°C vorgewärmt wird. Das Metallband weist vor der Wärmebehandlung eine Oxidschicht auf, die beispielsweise durch das Spülwasser der Beizsektion hervorgerufen wird. Diese Oxidschicht besteht im Wesentlichen aus Fe₂O₃ (Eisen(III)-oxid, Hämatit) und Fe₃O₄ (Magnetit).

In der Vorwärmzone baut sich diese Oxidschicht weiter auf, da in den Abgasen des direkt-befeuerten Ofens noch Sauerstoff und Wasserdampf vorhanden sind. Diese Oxidschicht ist jedoch störend, da sie bei einer nachfolgenden internen Oxidation im direkt-befeuerten Ofen die Diffusion von Sauerstoff ins Basismaterial behindert. Durch die Sauerstoffdiffusion ins Basismaterial kann Siliziumoxid gebildet werden, das als Diffusionsbarriere fürs Silizium dient, was vorteilhaft ist.

Das Metallband wird daher gemäß Stand der Technik nachfolgend im direkt-befeuerten Ofen einer reduzierenden Atmosphäre ausgesetzt, dafür werden die Brenner mit einem Brennstoffüberschuss betrieben, d.h. unter Luft- bzw. Sauerstoffmangel, sodass die Verbrennungsprodukte einen hohen CO- und H₂-Gehalt aufweisen und somit reduzierend wirken. Die störende Eisenoxidschicht wird dadurch abgebaut.

Nachfolgend wird am Ende des direkt-befeuerten Ofens das Metallband bei hohen Temperaturen einer oxidierenden Atmosphäre ausgesetzt, sodass dadurch eine interne Oxidation der Legierungselemente wie Silizium oder Mangan erreicht wird. Außerdem bildet sich auch FeO (Wüstit).

Bei herkömmlichen direkt-befeuerten Öfen bzw. bei hohen Produktionsraten ist jedoch die verbleibende Zeit für die interne Oxidation recht kurz, dies kann sich negativ auf die Produktqualität auswirken.

Ziel der Erfindung ist ein Verfahren zur Wärmebehandlung von Metallbändern bereitzustellen, bei dem die Reaktionen im direkt-befeuerten Ofen verbessert werden, insbesondere die interne Oxidation von Silizium und Mangan im Basismaterial.

Gelöst wird diese Aufgabe durch ein Verfahren gemäß Patentanspruch 1. Erfindungsgemäß wird das Metallband in der Vorwärmzone mit heißem Schutzgas vorgewärmt und zusätzlich bevor es in den direkt-befeuerten Ofen (DFF) eintritt mit einem elektrischen Heizsystem, vorzugsweise mit einer Induktionsheizung, weiter erhitzt. Die Wärme der heißen Abgase des direkt-befeuerten Ofens wird dabei zur Vorwärmung des Schutzgases für die Vorwärmzone verwendet.

Durch die Vorwärmung des Metallbandes in einer Schutzgasatmosphäre wird der Aufbau einer unerwünschten Oxidschicht verhindert und durch das elektrische Heizsystem vor dem direkt-befeuerten Ofen kann die Eintrittstemperatur des Metallbandes in den Ofen erheblich erhöht werden, vorzugsweise auf über 500°C. Durch die höhere Eintrittstemperatur des Metallbandes steht mehr Zeit für die chemischen Reaktionen im direkt-befeuerten Ofen, wie Reduktion oder Oxidation, zur Verfügung.

Speziell die interne Oxidation des Basismaterials des Metallbandes kann dadurch besser kontrolliert bzw. effizienter durchgeführt werden.

Vorzugsweise wird das Metallband in der Vorwärmzone mit Hilfe von heißem Stickstoff auf mehr als 200°C erhitzt, vorzugsweise auf bis zu 300°C. Danach wird das Metallband durch das elektrische Heizsystem weiter auf mehr als 350°C, vorzugsweise auf mehr als 500°C, erhitzt.

Es ist günstig wenn das elektrische Heizsystem das Metallband in einer Schutzgasatmosphäre, vorzugsweise in einer Stickstoffatmosphäre, erhitzt. Es ist aber auch denkbar, dass das elektrische Heizsystem das Metallband in einer leicht reduzierenden Atmosphäre, vorzugsweise in einer Stickstoffatmosphäre mit 2-3% Wasserstoff, erhitzt.

Die Wärme der Abgase kann auch zur Vorwärmung der Verbrennungsluft für Brenner des direkt-befeuerten Ofens verwendet werden.

Den Gegenstand der Erfindung bildet auch eine Ofenanlage gemäß Patentanspruch 7 zur Durchführung des Verfahrens. Diese Ofenanlage weist eine Vorwärmzone, in der das Metallband mit Hilfe von heißem Gas vorgewärmt wird und einen nachfolgenden direkt-befeuerten Ofen zur weiteren Wärmebehandlung des Metallbandes auf. Erfindungsgemäß ist das heiße Gas ein Schutzgas, vorzugsweise Stickstoff, und zusätzlich ist nach der Vorwärmzone und vor dem direkt-befeuertem Ofen ein elektrisches Heizsystem angeordnet, zur weiteren Temperaturerhöhung des Metallbandes. Die Abgase des direkt-befeuerten Ofens erwärmen über einen Wärmetauscher das Gas für die Vorwärmung.

Es ist günstig, wenn das elektrische Heizsystem eine Induktionsheizung ist bzw. wenn die Atmosphäre innerhalb des elektrischen Heizsystems eine Schutzgasatmosphäre ist.

Im Folgenden wird ein Ausführungsbeispiel der Erfindung anhand von zwei Zeichnungen beschrieben. Es zeigen:
Fig. 1 einen schematischen Aufbau der Ofenanlage;
Fig. 2 einen schematischen Aufbau des Wärmerückgewinnungssystems der Ofenanlage;
Gleiche Bezugszeichen in den beiden Figuren bezeichnen jeweils gleiche Anlagenteile bzw. Stoffströme.

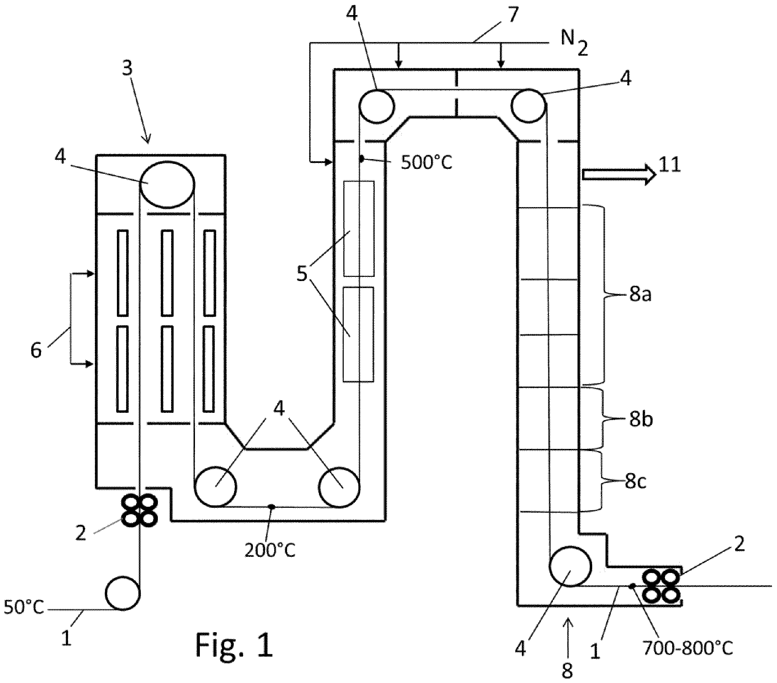

In Figur 1 gelangt das Metallband 1 kontinuierlich mit einer Eintrittstemperatur von ungefähr 50°C über ein Dichtungswalzenpaar 2 in die Vorwärmzone 3 der Ofenanlage und wird dort mit Hilfe von heißem Stickstoff 6 auf ungefähr 200°C erwärmt. Der heiße Stickstoff 6 wird über auf 450°C erhitzt und wieder der Vorwärmzone zur Erwärmung des Metallbandes 1 zugeführt.

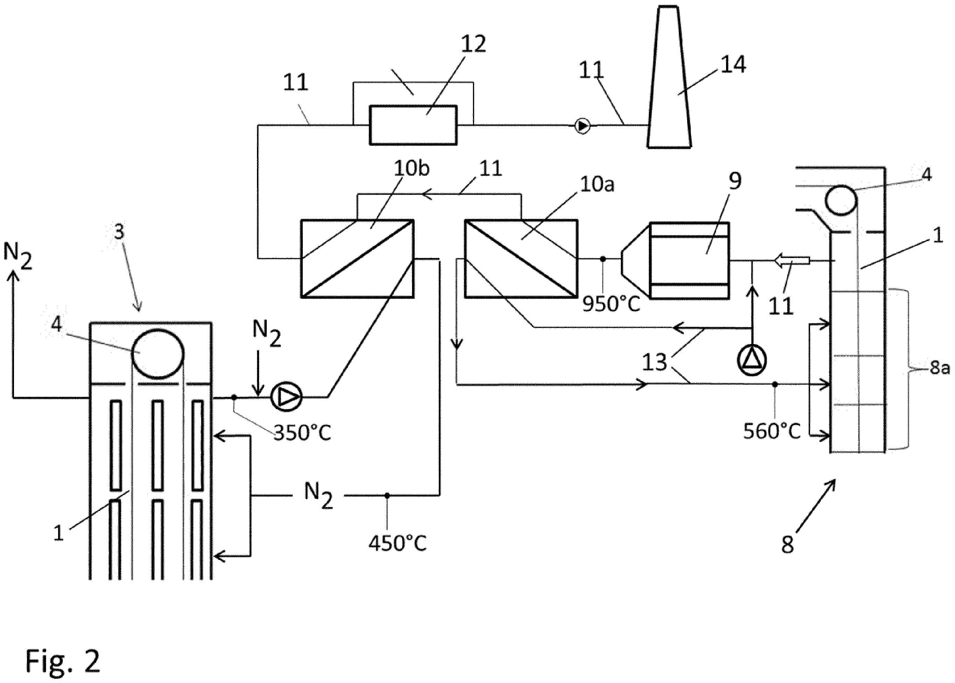

Da das Metallband 1 beim Eintritt in die Vorwärmzone 3 an seiner Oberfläche teilweise mit Wasser oder auch Kohlenwasserstoffen benetzt ist, würden sich bei einem geschlossenen Stickstoff-Kreislauf Wasserdampf und Kohlenwasserstoffe in der Vorwärmzone 3 ansammeln. Um dies zu vermeiden, wird ein Teil des Stickstoffs aus der Vorwärmzone 3 entfernt und durch frischen Stickstoff ersetzt, wie dies durch die beiden Pfeile in Fig. 2 dargestellt ist.

## Patentansprüche

1. Verfahren zur Wärmebehandlung eines Metallbandes (1), wobei das Metallband (1) in einer Vorwärmzone (3) durch heißes Gas (6) vorgewärmt wird und wobei das Metallband (1) danach in einem direkt-befeuerten Ofen (8) in einer reduzierenden und/oder oxidierenden Atmosphäre weiter wärmebehandelt wird, **dadurch gekennzeichnet, dass** das Metallband (1) in der Vorwärmzone (3) mit Hilfe von Schutzgas (6) vorgewärmt wird und dass es bevor es in den direkt-befeuerten Ofen (8) eintritt mit einem elektrischem Heizsystem (5), vorzugsweise mit einer Induktionsheizung, weiter erhitzt wird, wobei die Wärme der Abgase (11) des direkt-befeuerten Ofens (8) zur Vorwärmung des Schutzgases (6) für die Vorwärmzone (3) verwendet wird.

2. Verfahren nach Anspruch 1, **dadurch gekennzeichnet, dass** das Metallband (1) in der Schutzgasatmosphäre der Vorwärmzone (3) auf mehr als 200°C erhitzt wird, vorzugsweise auf bis zu 300°C.

3. Verfahren nach Anspruch 2, **dadurch gekennzeichnet, dass** das Metallband (1) durch das elektrische Heizsystem auf mehr als 350°C, vorzugsweise auf mehr als 500°C erhitzt wird.

4. Verfahren nach einem der Ansprüche 1 bis 3, **dadurch gekennzeichnet, dass** das elektrische Heizsystem (5) das Metallband (1) in einer Schutzgasatmosphäre, vorzugsweise in einer Stickstoffatmosphäre, erhitzt.

5. Verfahren nach einem der Ansprüche 1 bis 3, **dadurch gekennzeichnet, dass** das elektrische Heizsystem (5) das Metallband (1) in einer reduzierenden Atmosphäre, vorzugsweise in einer Stickstoffatmosphäre mit 2-3% Wasserstoff, erhitzt.

6. Verfahren nach einem der Ansprüche 1 bis 5, **dadurch gekennzeichnet, dass** die Wärme der Abgase (11) des direkt-befeuerten Ofens (8) zur Vorwärmung der Verbrennungsluft (13) für die Brenner des direkt-befeuerten Ofens (8) verwendet wird.

7. Ofenanlage zur Wärmebehandlung von Metallbändern (1) mit einer Vorwärmzone (3), in die Gas (6) zur Vorwärmung des Metallbandes (1) zuführbar ist, und mit einem nachfolgenden direkt-befeuerten Ofen (8) zur weiteren Wärmebehandlung des Metallbandes (1), **dadurch gekennzeichnet, dass** das Gas (6) ein Schutzgas ist und dass nach der Vorwärmzone (3) und vor dem direkt-befeuertem Ofen (8) ein elektrisches Heizsystem (5) angeordnet ist, zur weiteren Temperaturerhöhung des Metallbandes (1), wobei Abgase (11) des direkt-befeuerten Ofens (8) einem Wärmetauscher (10b) zuführbar sind, durch den Wärme aus dem Abgas (11) dem Gas (6) für die Vorwärmung zuführbar ist.

8. Ofenanlage nach Anspruch 7, **dadurch gekennzeichnet, dass** das elektrische Heizsystem (5) eine Induktionsheizung ist.

9. Ofenanlage nach einem der Ansprüche 7 oder 8, **dadurch gekennzeichnet, dass** die Atmosphäre innerhalb des elektrischen Heizsystems (5) eine Schutzgasatmosphäre ist.

## Claims

1. Method for treating a metal strip (1), where the metal strip (1) is pre-heated by hot gas (6) in a pre-heating zone (3) and where the metal strip (1) is further heat-treated afterwards in a directly fired furnace (8) in a reducing and/or oxidizing atmosphere, **characterized in that** the metal strip (1) is pre-heated with the aid of inert gas (6) in the pre-heating zone (3)and **in that** it is further heated by an electric heating system (5), preferably with an induction heating system, before it enters the directly heated furnace (8), where the heat in the exhaust gases (11) from the directly fired furnace (8) is used to pre-heat the inert gas (6) for the pre-heating zone (3).

2. Method according to claim 1, **characterized in that** the metal strip (1) is heated to more than 200°C, preferably to up to 300°C, in the inert gas atmosphere in the pre-heating zone (3).

3. Method according to claim 2, **characterized in that** the metal strip (1) is heated to more than 350°C, preferably to more than 500°C, by the electric heating system.

4. Method according to one of claims 1 to 3, **characterized in that** the electric heating system (5) heats the metal strip (1) in an inert gas atmosphere, preferable in a nitrogen atmosphere.

5. Method according to one of claims 1 to 3, **characterized in that** the electric heating system (5) heats the metal strip (1) in a reducing atmosphere, preferably in a nitrogen atmosphere containing 2-3% hydrogen.

6. Method according to one of claims 1 to 5, **characterized in that** the heat in the exhaust gases (11) from the directly fired furnace (8) is used to pre-heat the combustion air (13) for the burners in the directly fired furnace (8).

7. Furnace plant for heat treatment of metal strips (1), with a pre-heating zone (3) into which gas (6) can be fed for pre-heating the metal strip (1) and with a subsequent directly fired furnace (8) for further heat treatment of the metal strip (1), **characterized in that** the gas (6) is an inert gas and **in that** an electric heating system (5) to further increase the temperature of the metal strip (1) is located after the pre-heating zone (3) and before the directly fired furnace (8), where exhaust gases (11) from the directly fired furnace (8) can be fed to a heat exchanger (10b), through which heat from the exhaust gas (11) can be fed to the gas (6) for pre-heating.

8. Furnace plant according to claim 7, **characterized in that** the electric heating system (5) is an induction heating system.

9. Furnace plant according to one of claims 7 or 8, **characterized in that** the atmosphere inside the electric heating system (5) is an inert gas atmosphere.

## Revendications

1. Procédé de traitement thermique d'une bande de métal (1), la bande de métal (1) étant préchauffée par du gaz chaud (6) dans une zone de préchauffage (3) et la bande de métal (1) étant encore traitée thermiquement dans un four de chauffe directe (8) sous atmosphère oxydante et/ou réductrice, **caractérisé en ce que** la bande de métal (1) est préchauffée à l'aide d'un gaz inerte (6) dans la zone de préchauffage (3) et **en ce qu'**elle est davantage chauffée par un système de chauffage électrique (5), de préférence par un système de chauffage par induction, avant qu'elle n'entre dans le four de chauffe directe (8), la chaleur des gaz d'échappement (11) provenant du four de chauffe directe (8) étant utilisée pour préchauffer le gaz inerte (6) pour la zone de préchauffage (3).

2. Procédé selon la revendication 1, **caractérisé en ce que** la bande de métal (1) est chauffée à plus de 200°C, de préférence à 300°C maximum, sous atmosphère de gaz inerte dans la zone de préchauffage (3).

3. Procédé selon la revendication 2, **caractérisé en ce que** la bande de métal (1) est chauffée à plus de 350°C, de préférence à plus de 500°C, par le système de chauffage électrique.

4. Procédé selon l'une des Revendications 1 à 3, **caractérisé en ce que** le système de chauffage électrique (5) chauffe la bande de métal (1) sous atmosphère de gaz inerte, de préférence sous atmosphère d'azote.

5. Procédé selon l'une des revendications 1 à 3, **caractérisé en ce que** le système de chauffage électrique (5) chauffe la bande de métal (1) sous atmosphère réductrice, de préférence sous atmosphère d'azote contenant entre 2 et 3 % d'hydrogène.

6. Procédé selon l'une des revendications 1 à 5, **caractérisé en ce que** la chaleur des gaz d'échappement (11) provenant du four de chauffe directe (8) est utilisée pour préchauffer l'air de combustion (13) destiné aux brûleurs dans le four de chauffe directe (8).

7. Installation de four pour le traitement thermique de bandes de métal (1), comprenant une zone de préchauffage (3) dans laquelle le gaz (6) peut être amené pour préchauffer la bande de métal (1) et pour poursuivre le traitement thermique de la bande de métal (1) à l'aide d'un four de chauffe directe subséquent (8), **caractérisé en ce que** le gaz (6) est un gaz inerte et **en ce qu'**un système de chauffage électrique (5) servant à augmenter davantage la température de la bande de métal (1) est situé en aval de la zone de préchauffage (3) et en amont du four de chauffe directe (8), les gaz d'échappement (11) provenant du four de chauffe directe (8) pouvant être amenés à un échangeur thermique (10b), qui permet d'amener la chaleur provenant des gaz d'échappement (11) au gaz (6) pour le préchauffage.

8. Installation de four selon la revendication 7, **caractérisé en ce que** le système de chauffage électrique (5) est un système de chauffage par induction.

9. Installation de four selon l'une des Revendications 7 ou 8, **caractérisé en ce que** l'atmosphère à l'intérieur du système de chauffage électrique (5) est une atmosphère de gaz inerte.
